# EUROPEAN PATENT APPLICATION

(11) **EP 2 377 818 A1**
(43) Date of publication of application: **19.10.2011**
(21) Application number: 10731140.9
(22) Date of filing: 12.01.2010
(51) Int. Cl.: C02F 1/44

(54) **WATER PURIFIER**

(30) Priority: 13.01.2009 JP 2009005211
(71) Applicant: Mitsubishi Rayon Cleansui Company, Limited, Tokyo 103-0016 (JP); Panasonic Electric Works Co., Ltd., Kadoma-shi, Osaka 571-8686 (JP)
(72) Inventor: HATAKEYAMA, Atsushi, Tokyo 1030016 (JP); ISHIKAWA, Takeshi, Nukata-gun Aichi 444-0103 (JP); ODAMAKI, Noboru, Tokyo 103-0016 (JP); USHIDA, Harumi, Hikone-shi Shiga 522-0055 (JP); KATO, Makoto, Hikone-shi Shiga 522-8520 (JP); KIMURA, Shouzou, Tokyo 1030016 (JP)
(74) Representative: Siegert, Georg
(86) International application number: PCT/JP2010/000108
(87) International publication number: WO 2010/082469

(57) **Abstract**

There is provided a water purifier in which a display portion can obtain a higher waterproof property and the workability in manufacturing of the display portion can be improved. In a water purifier which includes a display portion (10) displaying announcement information, the display portion (10) includes an indicator (24), a circuit board (22) to which a control circuit controlling the indicator (24) is attached, and a case (26) which accommodates the indicator (24) and the circuit board (22), the case (26) includes a case main body (27) which has a cylindrical shape having opening portions at both ends thereof and is made of a transparent material, and a lid body (28) which liquid-tightly closes a first opening portion (27a) of the case main body, and a second opening portion (27b) of the case main body (27) is sealed by a resin (25).

## Description

### Technical Field

The present invention relates to a water purifier.
Priority is claimed on Japanese Patent Application No. 2009-005211, filed January 13, 2009, the content of which is incorporated herein by reference.

### Background Art

There are known water purifiers which filter water by using a filter using a hollow fiber membrane and the like. In this kind of water purifier, it is necessary to replace a filter cartridge when a certain amount of water has been filtered. Accordingly, a flowmeter which measures the amount of filtered water is provided, and the measured flow rates are integrated and stored in the storage portion of a control device. When the integrated value reaches a predetermined value, a user is notified of the necessity of replacing the filter cartridge with a new filter cartridge.
In addition, in the case of water purifiers having a mechanism which switches between a filtration mode for filtering and ejecting raw water flowing to the water purifier with a filter cartridge and a raw water mode for ejecting raw water as is without passing through the filter cartridge, a user is notified of the current mode of the water purifier.

There is known a water purifier which includes a display portion using a liquid crystal indicator in order to visually notify the user of such information (for example, see PTL1).
The display portion of the water purifier described in PTL 1 includes a circuit board having a control circuit attached thereto, a liquid crystal indicator fixed to the upper surface of the circuit board, and a case accommodating the circuit board and the liquid crystal indicator. The upper surface of the case is disposed on the viewer's side, and the lower surface thereof is opened. The circuit board is attached so as to block the opening of the case, a one-component curable resin is filled so as to cover the opening end of the case and the lower surface of the circuit board, and the case is sealed by the resin.

### Citation List

### Patent Literature

[PTL 1] Japanese Unexamined Patent Application Publication No. 2007-175616

### Summary of Invention

### Technical Problem

However, in the structure described in PTL 1, the waterproof property in the case is maintained by the resin covering the opening end of the case and the lower surface of the circuit board, but the bonding portion between the case and the resin is disposed in the outer surface of the display portion which easily becomes wet due to splashing of water or the like. Accordingly, when the adhesion between the case and the resin is insufficient, there is concern that the waterproof property in the case may be damaged. When the waterproof property in the case is insufficient, display defects such as fogging of the display portion easily occur.
In addition, it is necessary to seal the entire lower surface of the circuit board with the resin, but the workability in manufacturing of the display portion is poor due to a wide sealing area.

The invention is contrived in view of the above-described circumstances, and an object thereof is to provide a water purifier in which a display portion can obtain a higher waterproof property and the workability in manufacturing of the display portion can be improved.

### Solution to Problem

(1) A water purifier including: a display portion which displays announcement information, in which the display portion includes an indicator, a circuit board controlling the indicator, and a case accommodating the indicator and the circuit board, one or a plurality of electric wires is connected to the circuit board, the case includes a case main body provided with an opening portion and a through hole, the through hole has an area smaller than the area of the opening portion, the opening portion is sealed, the through hole is sealed by a resin, and the electric wire is led out of the case through the through hole.
(2) The water purifier according to (1), in which the case main body has a cylindrical shape having openings at both ends thereof, and the through hole is provided inside one opening end of the case main body.
(3) The water purifier according to (1) or (2), in which the opening portion is provided at the other end of the case main body, and the opening portion is sealed by a lid body.
(4) The water purifier according to (1), in which the resin is an ultraviolet curable resin.
(5) The water purifier according to (1) or (2), in which the indicator includes a liquid crystal panel.
(6) The water purifier according to any one of (1) to (3), further including: a raw water inflow port receiving raw water; a cartridge filtering the raw water; and an ejection port through which the filtered, purified water is ejected.
(7) The water purifier according to (4), in which the raw water inflow port is removably connected to a water faucet.
(8) A method of manufacturing a display member for a water purifier which displays announcement information, including: inserting a circuit board to which one or a plurality of electric wires is connected in a case which is provided with an opening portion and a through hole through the opening portion; leading out the electric wire from the through hole; and sealing the through hole by a sealing agent.
(9) The method of manufacturing a display member for a water purifier according to (8), in which the sealing agent is an ultraviolet curable resin, and after injection of the ultraviolet curable resin from the outside of the case, the ultraviolet curable resin is cured by ultraviolet irradiation.
(10) A method of manufacturing a water purifier, including: engaging the display member for a water purifier obtained by the method according to Claim 8 or 9 with a main body casing of a water purifier main body.

### Advantageous Effects of Invention

Since a water purifier of the invention has a structure in which the case of a display portion includes a cylindrical case main body made of a transparent material and a lid body which liquid-tightly closes one opening portion of the case main body, and only the other opening portion of the case main body is sealed by a resin, the bonding between the case and the resin is not carried out in the outer surface of the display portion which easily becomes wet due to splashing of water or the like. Accordingly, even when the adhesion between the case and the resin is insufficient, a high waterproof property can be secured. In addition, since the area necessary for sealing in the resin is small, the workability in manufacturing of the display portion is improved.

### Brief Description of Drawings

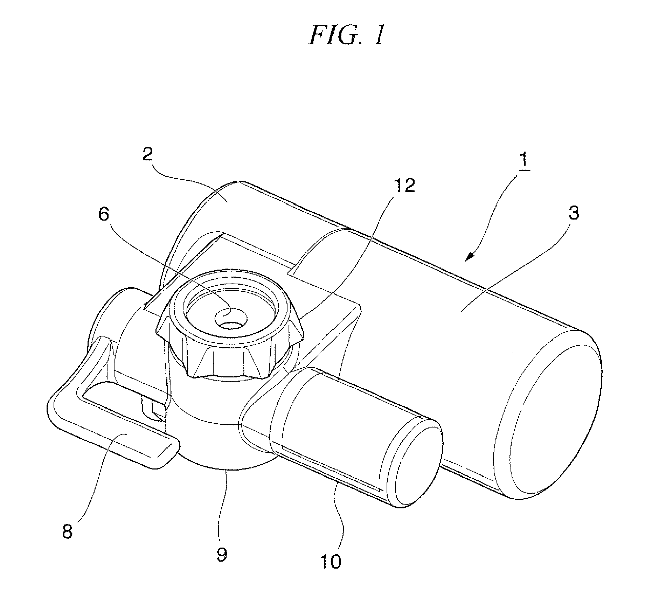

FIG. 1 is a perspective view showing an embodiment of a water purifier of the invention.
FIG. 2 is a cross-sectional view showing a display portion in section view, taken along the line II-II of FIG. 3.
FIG. 3 is a cross-sectional view taken along the line III-III of FIG. 2.

### Description of Embodiments

Hereinafter, a faucet direct connection-type water purifier which is a preferred embodiment of the invention will be exemplified and described with reference to the accompanying drawings.
A water purifier 1 of this embodiment is a so-called faucet direct connection-type water purifier having a structure in which a raw water inflow port 6 is removably connected to a water faucet, and includes a main body casing 2 and a filter cartridge 3. The main body casing 2 has a switching lever 8 and a display portion 10 attached thererto.
The reference sign 6 in the drawing represents the raw water inflow port of the main body casing 2. The raw water inflow port 6 is an opening portion which receives tap water (raw water) in the main body casing 2 and is removably connected to the water faucet via an annular fixing tool 12.
The filter cartridge 3 accommodates a filtering material such as a hollow fiber membrane which filters the tap water (raw water) flowing to the main body casing 2 from the raw water inflow port 6, and is configured to be removable from the main body casing 2.
The switching lever 8 is switching means for switching the ejection mode from the water purifier 1 among a "purification mode" for ejecting purified water which is obtained by filtering the tap water flowing to the raw water inflow port 6 with the filtering material in the filter cartridge 3, a "raw water mode" for directly ejecting the tap water flowing to the raw water inflow port 6 without filtering, and a "shower mode" for ejecting the raw water in a shower manner. A lower surface 9 of the main body casing 2 is provided with an ejection port for purified water, an ejection port for raw water, and a shower-manner ejection port for raw water.

Although not shown in the drawing, a flowmeter which measures the amount of the water filtered with the filter cartridge 3 is provided in the main body casing 2. The flowmeter is disposed on the downstream side of the filter cartridge 3, and is configured to measure the amount (amount of filtered water) of the water flowing out of the filter cartridge 3, that is, the water (purified water) filtered with the filter cartridge 3.
The flowmeter can appropriately employ a known structure such as the structure described in Japanese Unexamined Patent Application Publication No. 2003-200154. In greater detail, the flowmeter has a configuration in which an impeller which rotates in one direction by the water flow is provided in a flow path through which the purified water which is filtered with the filter cartridge 3 is ejected from the purified water ejection port, and a magnet is attached in the shaft of the impeller so that the number of rotations of the magnet is detected by magnetic detection means such as a reed switch. Since the number of rotations of the magnet reflects an increase and a decrease in the flow rate in proportion to the number of rotations of the impeller, the number of rotations which is detected by the reed switch is subjected to arithmetic processing by a control device to calculate necessary information such as the flow rate or the integrated flow rate, and the information is displayed on the display portion 10.

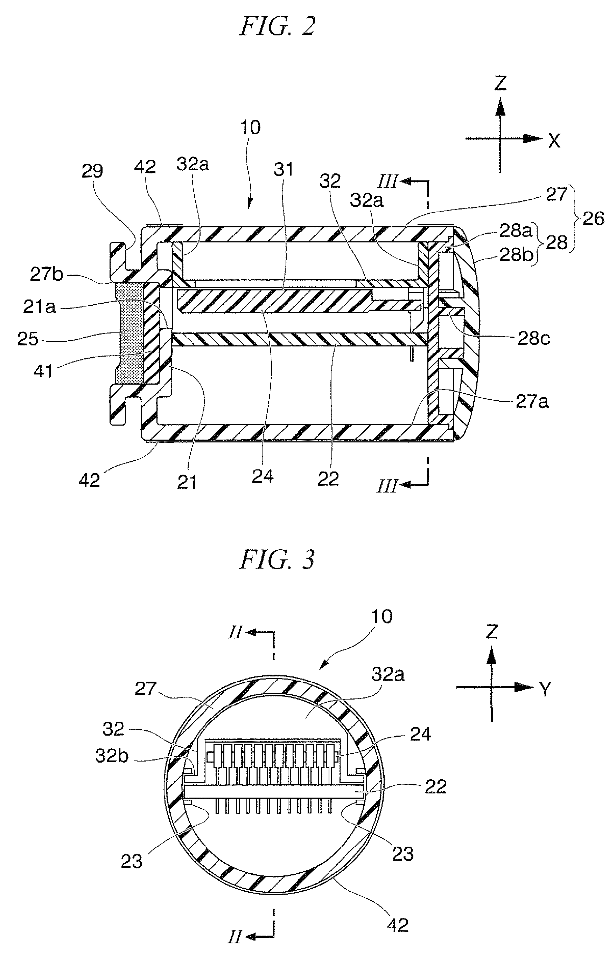

Next, the configuration of the display portion 10 will be described.
As shown in FIGS. 2 and 3, the display portion 10 includes a circuit board 22 which has a control circuit attached thererto, an indicator 24 which is controlled by the control circuit of the circuit board 22, and a case 26 which accommodates the circuit board 22 and the indicator 24. In this embodiment, the indicator 24 is fixed to one surface of the circuit board 22.
The case 26 includes a cylindrical case main body 27 which has opening portions at both ends in the longitudinal direction and a lid 28 which liquid-tightly closes a first opening portion 27a of the case main body 27. The case main body 27 is made of a transparent material. In addition, a second opening portion 27b of the case main body 27 is sealed by a resin 25 (hereinafter, also referred to as the sealing resin 25).
The case main body 27 is preferably formed integrally using, for example, an ABS resin or an acrylic resin from the point of view of the transparency, workability, and strength.

In this embodiment, a liquid crystal display element having a known configuration can be used as the indicator 24. The indicator 24 displays notification information such as whether the water purifier is in the purification mode or in the raw water mode and whether a timing for replacement of the filter cartridge is reached or not.
The reference sign 31 in the drawing represents a liquid crystal panel which is installed so that the display screen can be viewed from the outside of the case main body 27.
Hereinafter, in a plane parallel to the display screen of the liquid crystal panel 31, the longitudinal direction of the case 26 is set to the X direction, and a direction perpendicular to the X direction is set to the Y direction. A direction perpendicular to both of the X and Y directions is set to the Z direction.

A frame body 32 which has a window portion in a region overlapping with the display screen is provided on the display screen side of the liquid crystal panel 31 between the liquid crystal panel 31 and the case main body 27. The frame body 32 is opaque.
Semicircular plate-like rising portions 32a are provided at both ends of the frame body 32 in the X direction. In addition, projecting portions 32b hanging toward the circuit board 22 and having a tip end portion headed toward the outside in the Y direction are provided at both ends of the frame body 32 in the Y direction.
The inner surface of the case main body 27 is provided with fixing portions 23 for holding the frame body 32 and the circuit board 22 at positions opposed to each other. Each fixing portion 23 is formed of two protrusions which are parallel to each other in the X direction, and the projecting portion 32b of the frame body 32 and the tip end portion of the circuit board 22 in the Y direction are inserted so as to be slid in the X direction between the two protrusions.

A partition wall 21 having a through hole 21 a is formed inside of the second opening portion 27b of the case main body 27 to be integral with the case main body 27. A plurality of electric wires (not shown) which are electrically connected to the circuit board 22 extends to the main body casing 2 through the through hole 21 a and the second opening portion 27b of the case main body 27.
The through hole 21a of the partition wall 21 may have a size so that the electric wires can be led out to the outside therethrough, and may also have a size so that the circuit board 22 cannot pass therethrough.
In this manner, since the partition wall 21 having the through hole 21a is provided inside of the second opening portion 27b of the case main body 27, it is possible to reduce the area of the opening which can be a moisture intrusion route to the case main body 27.

The outer circumferential surface of the second opening portion 27b of the case main body 27 is provided with a stage portion 29 for removable fixing to the main body casing 2.
In the second opening portion 27b of the case main body 27, a packing 41 is fitted outside of the partition wall 21. The packing 41 is made of an elastic material and is provided with the same number of through holes for the electric wires having a diameter smaller than those of the electric wires. In addition, the sealing resin 25 is filled and cured outside of the packing 41, and thus the opening section 27b is liquid-tightly sealed. The electric wires are led out of the case main body 27 through the through holes of the packing 41 and the sealing resin 25.

The lid 28 has an interior lid 28a which is welded by welding processing and an exterior lid 28b which is engaged with an engaging projection 28c in the outer surface of the interior lid 28a to be fixed thereto. The interior lid 28a may be transparent, or may be opaque. The exterior lid 28b is preferably opaque.
For example, a preferred material for the interior lid 28a is the same as that used for the case main body 27 from the point of view of weldability in the welding processing. In addition, a preferred material for the exterior lid 28b is the same as that used for the main body casing 2, and for example, an ABS resin or an acrylic resin is preferably used.

In this embodiment, in the entire portion closer to the circuit board 22 than the fixing portion 23 in the circumferential surface of the case main body 27 made of a transparent material, and the portions at both sides outside the rising portion 32a of the frame body 32 in the X direction, an outer body 42 made of an opaque material is provided, and only the upper surface of the frame body 32 in the case main body 27 and the liquid crystal panel 31 in the window portion thereof can be visually confirmed from the outside.
The outer body 42 may cover a desired portion in the case main body 27, and preferably adheres to the case main body 27. For example, an opaque film material may be adhered onto the outer surface of the case main body 27.

The sealing resin 25 may be, for example, a two-component curable resin which is cured by mixing two liquids, or may be a one-component curable resin which is cured by only one liquid. In addition, the sealing resin 25 may be a thermosetting resin, or may be an ultraviolet curable resin which is cured by ultraviolet irradiation. These can be used by appropriately selecting marketed products.
For example, as a two-component curable and thermosetting resin, a urethane curable resin composition such as UF-820A or UF-820BN (both of them are product names, prepared by SNAYU REC CO., LTD.) can be used. These may be used in combination of two or more kinds.
For example, as a one-component curable and ultraviolet curable resin, a urethane acrylate curable resin composition such as SUV-387 (product name, prepared by SNAYU REC CO., LTD.) can be used.
From the point of view of a curing time, an ultraviolet curable resin is preferably used. From the point of view of a handling property, a one-component curable resin is preferably used.

In manufacturing of the display portion 10 of this embodiment, for example, first, the circuit board 22 to which the liquid crystal panel 31 is fixed and the frame body 32 are inserted in the fixing portions 23 of the case main body 27 including the outer body 42 from the first opening portion 27a of the case main body 27.
At this time, the electric wires connected to the circuit board 22 are led out of the case main body 27 through the through hole 21a of the partition wall 21 of the case main body 27.
Next, the packing 41 through which the electric wires pass is fitted in the second opening portion 27b of the case main body 27 and the interior lid 28a is welded to the opening portion 27a of the case main body 27. Thereafter, the inside of the second opening portion 27b is filled with the sealing resin 25 and the sealing resin is cured. For example, when the sealing resin 25 is an ultraviolet curable resin, the resin is cured by ultraviolet irradiation. At this time, since the case main body 27 is transparent, the resin can be sufficiently cured even when the ultraviolet irradiation is performed from the outside of the second opening portion 27b of the case main body 27. The electric wires are led out to the outside through the sealing resin 25.
Finally, the exterior lid 28b is engaged with and attached to the interior lid 28a.

In the water purifier 1 of this embodiment, the outer surface of the display portion 10 comes into contact with the outside and is easily wet with water, except the other end portion of the case main body 27 which is bonded to the main body casing 2. However, since the inner wall of the case 26, except the other end portion of the case main body 27, is formed of the transparent, cylindrical case main body 27 and the interior lid 28a welded to the first opening portion 27a of the case main 27, a high waterproof property is obtained.
In addition, since the case main body 27 is transparent, it is possible to visually confirm the internal indicator without providing a window portion by a separate member. Accordingly, the case main body 27 can be constituted of a cylindrical single member and a high waterproof property can be obtained.
Furthermore, since the second opening portion 27b of the case main body 27 is sealed by the packing 41 and the resin 25, the excellent waterproof property is obtained. In addition, since the area necessary for sealing in the resin 25, that is, the area of the through hole 21a is smaller than the area of the first opening portion 27a, only a minimum amount of the sealing resin 25 (sealing agent) is needed, and in this manner, the workability in manufacturing of the display portion 10 is good.

In addition, since the case main body 27 is made of a transparent material, an ultraviolet curable resin can be used as a resin for sealing. Since the ultraviolet curable resin is cured in a short time, the manufacturing efficiency of the display portion can be improved. Accordingly, the display portion can be manufactured in an in-line manner.
Particularly, in the case of a faucet direct connection-type water purifier, the water purifier has a small size, and thus an improvement in the workability or the manufacturing efficiency has a large effect.

The invention is not limited to the above-described embodiments, and various modifications and changes can be made within the scope of the technical idea described in the claims.
For example, in this embodiment, the case main body 27 has a cylindrical shape. However, it may have a cylindrical shape of which the cross section does not have a circular shape, or have an appropriately modified shape.

### Industrial Applicability

Since the structure is provided in which the case of a display portion includes a cylindrical case main body made of a transparent material and a lid body which liquid-tightly closes one opening portion of the case main body, and only the other opening portion of the case main body is sealed by a resin, the bonding between the case and the resin is not carried out in the outer surface of the display portion which easily becomes wet due to splashing of water or the like. Accordingly, even when the adhesion between the case and the resin is insufficient, a water purifier securing a high waterproof property can be provided. In addition, since the area necessary for sealing in the resin is small, the workability in manufacturing of the display portion can be improved.

### Reference Signs List

- 1 :: water purifier
- 2:: main body casing
- 3 :: filter cartridge
- 6:: raw water inflow port
- 8:: switching lever
- 10:: display portion
- 22:: circuit board
- 24:: indicator
- 25:: resin (sealing resin)
- 26:: case
- 27:: case main body
- 27a:: first opening portion
- 27b:: second opening portion
- 28:: lid
- 28a:: interior lid
- 28b:: exterior lid
- 31:: liquid crystal panel
- 32:: frame body
- 41:: packing
- 42:: outer body

## Claims

1. A water purifier comprising:
a display portion which displays announcement information,
wherein the display portion includes an indicator, a circuit board controlling the indicator, and a case accommodating the indicator and the circuit board,
one or a plurality of electric wires is connected to the circuit board,
the case includes a case main body provided with an opening portion and a through hole,
the through hole has an area smaller than the area of the opening portion,
the opening portion is sealed,
the through hole is sealed by a resin, and
the electric wire is led out of the case through the through hole.

2. The water purifier according to Claim 1,
wherein the case main body has a cylindrical shape having openings at both ends thereof, and
the through hole is provided inside one opening end of the case main body.

3. The water purifier according to Claim 1 or 2,
wherein the opening portion is provided at the other end of the case main body, and
the opening portion is sealed by a lid body.

4. The water purifier according to Claim 1,
wherein the resin is an ultraviolet curable resin.

5. The water purifier according to Claim 1 or 2,
wherein the indicator includes a liquid crystal panel.

6. The water purifier according to any one of Claims 1 to 3, further comprising:
a raw water inflow port receiving raw water;
a cartridge filtering the raw water; and
an ejection port through which the filtered, purified water is ejected.

7. The water purifier according to Claim 4,
wherein the raw water inflow port is removably connected to a water faucet.

8. A method of manufacturing a display member for a water purifier which displays announcement information comprising:
inserting a circuit board to which one or a plurality of electric wires is connected in a case which is provided with an opening portion and a through hole through the opening portion;
leading out the electric wire from the through hole; and
sealing the through hole by a sealing agent.

9. The method of manufacturing a display member for a water purifier according to Claim 8,
wherein the sealing agent is an ultraviolet curable resin, and
after injection of the ultraviolet curable resin from the outside of the case, the ultraviolet curable resin is cured by ultraviolet irradiation.

10. A method of manufacturing a water purifier comprising:
engaging the display member for a water purifier obtained by the method according to Claim 8 or 9 with a main body casing of a water purifier main body.
